# EUROPEAN PATENT APPLICATION

(11) **EP 2 949 245 A1**
(43) Date of publication of application: **02.12.2015**
(21) Application number: 15169131.8
(22) Date of filing: 26.05.2015
(51) Int. Cl.: A47J 31/56

(54) **WATER DISPENSING SYSTEM**

(30) Priority: 27.05.2014 AU 2014902001
(71) Applicant: Supakwik Water Heaters Pty Ltd., Coopers Plains, Queensland 4108 (AU)
(72) Inventor: Rousseau, Michael Kevin, Greenbank, Queensland 4124 (AU)
(74) Representative: Calderbank, Thomas Roger

(57) **Abstract**

A water dispensing system for dispensing water at a dispensing temperature, the system including a temperature-controlled tank for storing water, a tap for allowing water to be dispensed from the tank via the tap, a sensor for detecting the presence of a potential user in proximity to the tap, and a temperature controller configured so that, in a standby mode, the temperature controller maintains a temperature of the water at a standby temperature that is closer to an ambient temperature than the dispensing temperature, and in response to the sensor detecting the presence of a potential user in proximity to the tap, the temperature controller adjusts the temperature of the water to the dispensing temperature.

## Description

The present invention relates to water dispensing systems for dispensing water at a dispensing temperature.

The reference in this specification to any prior publication (or information derived from it), or to any matter which is known, is not, and should not be taken as an acknowledgment or admission or any form of suggestion that the prior publication (or information derived from it) or known matter forms part of the common general knowledge in the field of endeavour to which this specification relates.

A water dispensing system may be provided as a convenient means for dispensing water to users at a desired dispensing temperature. For example, boiling water dispensing systems are commonly provided in office kitchens where the demand for water at boiling or near boiling temperatures may exceed the boiling capacity of a kettle or where the associated delay associated with boiling water from room temperature is undesirable. In related examples, chilled water dispensing systems may be provided to conveniently dispense chilled (and commonly filtered) drinking water. Combination systems also exist which allow boiling or chilled water to be dispensed selectively from a common dispensing unit.

Typically, boiling water dispensing systems will be configured to maintain water in a reservoir at an elevated standby temperature (typically at or near the operating temperature at which water is to be dispensed in use) using a heater while the system is in a standby mode (i.e. not being actively used) so that the water can be dispensed from the reservoir at the desired temperature on demand and with minimal or no heating delays. However, due to heat loss, boiling water dispensing systems consume power on an ongoing basis while maintaining such an elevated temperature in the standby mode.

One potential means of reducing this power consumption in boiling water dispensing systems would be to reduce the standby temperature, thus reducing heat loss.

Traditionally, the industry has developed 24-hour, 7-day timers which provide the user with an ability to program the heater of the boiling water dispensing system to be turned off or operate at a reduced temperature at times when the system is unlikely to be used. For example, a timer may be programmed to turn off the heater between 11.30pm and 5am in a home environment or between 6pm and 6am in an office environment. In some examples these timers can be factory-programmed to turn the heater off during weekends.

Some manufacturers have also developed systems which are configured to reduce the standby temperature when the heater has not been used for a unit of time, say typically 2 hours.

However, problems may arise when a user requires water at the operating temperature when the system has been programmed to be off or is in a reduced temperature standby mode, for example when office staff work later than usual office hours or when a factory works overtime on a weekend. This would then require that the programmable timer be reprogrammed and the user would have to wait for the appliance to heat the water from room temperature or the reduced standby temperature back to the operating temperature. However, the timer would need to be reprogrammed back to its previous state if power is to still be conserved outside of these exceptional circumstances. This is an impractical arrangement, resulting in either a lost ability to use the system or a lost power saving opportunity.

Secondly, boiling water dispensing systems are not typically used continuously, but typically whenever users demand hot water for tea or coffee. In the home environment this may vary from 1 to say 10 times per 24 hours and at coffee and lunch breaks in a workplace environment. The boiling water dispensing systems may be used more frequently in a larger office environment, where employees are permitted coffee breaks at random, although there may still be extended periods of no demand for hot water from the systems.

Again, in current systems where heaters are placed in power saving standby modes after a period of time without use, this means that the user would need to remove the appliance from its power saving mode and wait for the appliance to return the water to operating temperature. This is not only inconvenient but wastes a significant amount of productive time, which also renders this means of power saving impractical.

Accordingly, due to the fact that usage frequencies can change randomly in various environments, current power saving features for boiling water dispensing systems are very limited in both their ability to save power and in user practicality.

It will also be appreciated that similar problems may exist in other types of temperature-regulated water dispensing systems in which water is maintained at a different standby temperature from room temperature, such as in chilled water dispensing systems which typically maintain a reduced standby temperature by chilling water in its reservoir (e.g. by refrigeration or other suitable chilling techniques), which is subject to similar power losses when in standby mode.

In a first broad form the present invention seeks to provide a water dispensing system for dispensing water at a dispensing temperature, the system including:
a) a temperature-controlled tank for storing water;
b) a tap for allowing water to be dispensed from the tank via the tap;
c) a sensor for detecting the presence of a potential user in proximity to the tap; and,
d) a temperature controller configured so that, in a standby mode, the temperature controller maintains a temperature of the water at a standby temperature that is closer to an ambient temperature than the dispensing temperature, and in response to the sensor detecting the presence of a potential user in proximity to the tap, the temperature controller adjusts the temperature of the water to the dispensing temperature.

In some embodiments, the dispensing temperature is greater than the standby temperature, and the tank includes a heater for heating the water responsive to a control input from the temperature controller.

In alternative embodiments, the dispensing temperature is less than the standby temperature, and the tank includes a chiller for chilling the water responsive to a control input from the temperature controller.

Typically the tank includes a temperature sensor for sensing a measured temperature of the water, and the temperature controller is configured to control the temperature of the water based on the measured temperature.

Typically the sensor is one of:
a) a motion sensor;
b) a proximity sensor; and,
c) a light sensor.

Typically the sensor is an infrared motion sensor.

In some embodiments, the sensor is mounted on the tap.

In alternative embodiments, the tap is mounted on the tank and the sensor is mounted on the tank.

In some embodiments, the system includes a hot water tank and a cold water tank, the temperature of water stored in each tank being controlled by the temperature controller based on the whether the sensor has detected the presence of a potential user.

Typically the system includes one or more indicator lights selectively activated by the controller to indicate at least one of:
a) a current mode of the system; and,
b) availability of water at the dispensing temperature.

Typically the temperature controller is configured so that the standby mode is activated when a potential user is not detected in proximity to the tap.

Typically the sensor is a motion detector and the system further includes a light sensor, and the temperature controller is configured to control the temperature of the water based on a combination of inputs received from the motion sensor and the light sensor.

Typically the temperature controller is configured so that a sleep mode is activated when light is not sensed and a potential user is not detected in proximity to the tap.

Typically activation of the sleep mode causes one of:
a) the temperature controller allowing the temperature of the water to approach the ambient temperature; and,
b) the temperature controller maintaining the temperature of the water at a sleep temperature that is closer to the ambient temperature than the standby temperature.

Typically the temperature controller is configured so that the standby mode is activated when light is sensed and a potential user is not detected in proximity to the tap.

Typically the temperature controller is configured so that:
a) if light is not sensed and a potential user is not detected, the sleep mode is activated;
b) if light is sensed and a potential user is not detected, the standby mode is activated; and,
c) if a potential user is detected, the temperature controller adjusts the temperature of the water to the dispensing temperature.

Typically the temperature controller is configured so that, when a potential user is not detected in proximity to the tap, the temperature controller selectively activates the standby mode or a sleep mode based on a usage profile.

Typically activation of the sleep mode causes one of:
a) the temperature controller allowing the temperature of the water to approach the ambient temperature; and,
b) the temperature controller maintaining the temperature of the water at a sleep temperature that is closer to the ambient temperature than the standby temperature.

Typically the usage profile defines one or more usage windows in a predetermined time period and the system further includes a clock for allowing a current time to be determined relative to the predetermined time period, the temperature controller selectively activating the standby mode or the sleep mode based on whether the current time falls inside a usage window.

Typically the temperature controller is configured so that:
a) if a potential user is not detected and the current time does not fall inside a usage window, the sleep mode is activated;
b) if a potential user is not detected and the current time falls inside a usage window, the standby mode is activated; and,
c) if a potential user is detected, the temperature controller adjusts the temperature of the water to the dispensing temperature.

Typically the system further includes a usage detector for detecting when water is dispensed, the system being configured to:
a) determine, using the usage detector, one or more usage events; and,
b) update the usage profile based on the one or more usage events.

Typically updating the usage profile includes:
a) determining a usage event;
b) determining, using the clock, a usage time corresponding to the usage event;
c) comparing the usage time to the one or more usage windows; and,
d) if the usage time does not fall inside a usage window, adding or adjusting a usage window to cover the usage time.

Typically the usage profile includes a plurality of time blocks within the predetermined time period and the one or more usage windows are defined by setting each time block as a usage time block or a sleep time block, and updating the usage profile includes, for a time block:
a) determining a number of usage events within the time block;
b) if the number of usage events exceeds a usage threshold, setting the time block as a usage time block; and,
c) if the number of usage events does not exceed the usage threshold, setting the time block as a sleep time block.

In a second broad form the present invention seeks to provide a water dispensing system for dispensing water at a dispensing temperature, the system including:
a) a temperature-controlled tank for storing water;
b) a tap for allowing water to be dispensed from the tank via the tap;
c) a usage detector for detecting when water is dispensed;
d) a clock for determining a current time; and,
e) a temperature controller for selectively adjusting a temperature of the water to the dispensing temperature, the temperature controller being configured to activate a sleep mode based on a usage profile defining one or more usage windows in a predetermined time period, the temperature controller activating the sleep mode if the current time does not fall inside a usage window, and wherein the system is further configured to:
   i) determine, using the usage detector, one or more usage events; and,
   ii) update the usage profile based on the one or more usage events.

In some embodiments, the dispensing temperature is greater than the standby temperature, and the tank includes a heater for heating the water responsive to a control input from the temperature controller.

In alternative embodiments, the dispensing temperature is less than the standby temperature, and the tank includes a chiller for chilling the water responsive to a control input from the temperature controller.

Typically the tank includes a temperature sensor for sensing a measured temperature of the water, and the temperature controller is configured to control the temperature of the water based on the measured temperature.

Typically activation of the sleep mode causes one of:
a) the temperature controller allowing the temperature of the water to approach the ambient temperature; and,
b) the temperature controller maintaining the temperature of the water at a sleep temperature that is closer to the ambient temperature than the dispensing temperature.

Typically the system further includes a sensor for detecting the presence of a potential user in proximity to the tap, and the temperature controller is configured so that, in response to the sensor detecting the presence of a potential user in proximity to the tap, the temperature controller adjusts the temperature of the water to the dispensing temperature.

Typically the sensor is one of:
a) a motion sensor;
b) a proximity sensor; and,
c) a light sensor.

Typically the sensor is an infrared motion sensor.

Typically the system further includes a sleep override switch, and the temperature controller is configured so that, when a user uses the sleep override switch, the sleep mode is deactivated and the temperature controller adjusts the temperature of the water to the dispensing temperature.

Typically the temperature controller is configured to activate a standby mode if the current time falls inside a usage window and the sleep override switch is not used, such that, in the standby mode, the temperature controller maintains a temperature of the water at a standby temperature that is closer to an ambient temperature than the dispensing temperature,

Typically the temperature controller is configured so that:
a) if the sleep override switch is not used and the current time does not fall inside a usage window, the sleep mode is activated;
b) if the sleep override switch is not used and the current time falls inside a usage window, the standby mode is activated; and,
c) if the sleep override switch is used, the temperature controller adjusts the temperature of the water to the dispensing temperature.

Typically updating the usage profile includes:
a) determining a usage event;
b) determining, using the clock, a usage time corresponding to the usage event;
c) comparing the usage time to the one or more usage windows; and,
d) if the usage time does not fall inside a usage window, adding or adjusting a usage window to cover the usage time.

Typically the usage profile includes a plurality of time blocks within the predetermined time period and the one or more usage windows are defined by setting each time block as a usage time block or a sleep time block, and updating the usage profile includes, for a time block:
a) determining a number of usage events within the time block;
b) if the number of usage events exceeds a usage threshold, setting the time block as a usage time block; and,
c) if the number of usage events does not exceed the usage threshold, setting the time block as a sleep time block.

An example of the present invention will now be described with reference to the accompanying drawings, in which: -
Figure 1 is a schematic side view of a first example of a water dispensing system in a counter-mounted configuration;
Figure 2 is a schematic side view of a second example of a water dispensing system, in a wall-mounted configuration;
Figure 3 is a block diagram of a first example of a temperature controller arrangement for a water dispensing system;
Figure 4 is a flow chart of an example operation of a temperature controller as shown in Figure 3;
Figure 5 is a block diagram of a second example of a temperature controller arrangement for a water dispensing system having a motion sensor and a light sensor;
Figure 6 is a block diagram of a third example of a temperature controller arrangement for a water dispensing system having a motion sensor, a light sensor, and respective hot and cold water tanks;
Figure 7 is a flow chart of an example operation of a temperature controller of a water dispensing system having a motion sensor and a light sensor;
Figure 8A is a schematic front view of an example of a tap assembly of a third example of a water dispensing system;
Figure 8B is a schematic side view of the tap assembly of Figure 8A;
Figure 8C is a schematic front view of an circuit board assembly of the tap assembly of Figure 8A;
Figure 9 is a diagram of an example of a usage profile for a week of time;
Figure 10A is a diagram of an example of a day of the usage profile of Figure 12;
Figure 10B is a diagram showing usage events in time blocks within the day of the usage profile of Figure 10A;
Figure 10C is a diagram of an example of an updated day of the usage profile of Figure 10A based on the usage events of Figure 10B;
Figure 11 is a flow chart of an example operation of a temperature controller of a water dispensing system having a motion sensor, in which the sleep mode is activated based on a usage profile;
Figure 12 is a block diagram of a fourth example of a temperature controller arrangement for a water dispensing system having a motion sensor and a usage detector;
Figure 13 is a block diagram of a fifth example of a temperature controller arrangement for a water dispensing system having a usage detector; and,
Figure 14 is a block diagram of a sixth example of a temperature controller arrangement for a water dispensing system having a sleep override switch and a usage detector.

### Detailed Description of the Preferred Embodiments

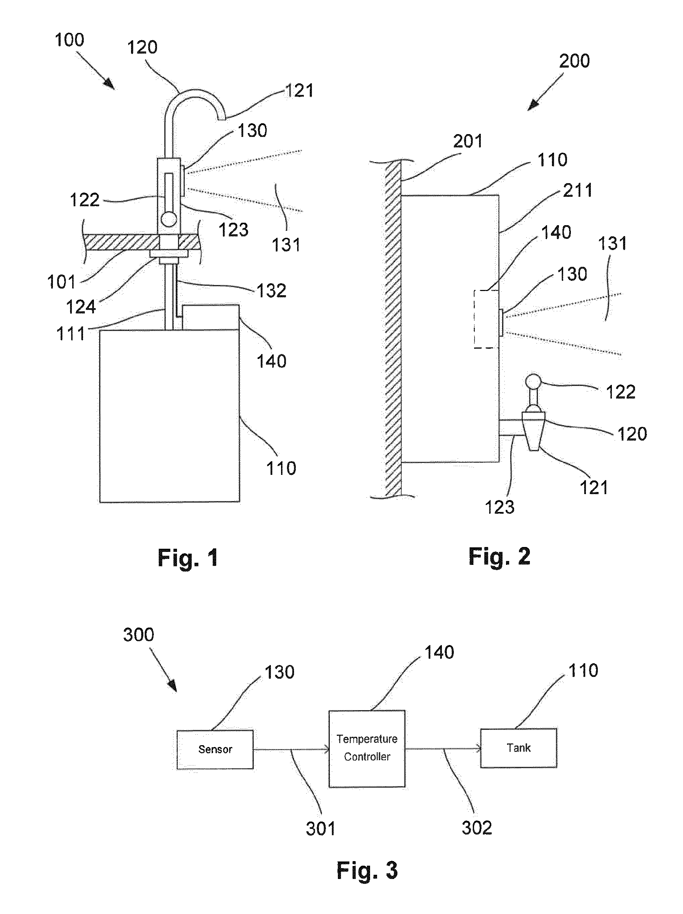

A first example of a water dispensing system 100 will now be described with reference to Figure 1.

The water dispensing system 100 is typically provided for dispensing water at a dispensing temperature, such as at a near-boiling temperature for preparing hot beverages or at a chilled temperature for drinking.

The system 100 includes a temperature-controlled tank 110 for storing water and a tap 120 for allowing water to be dispensed from the tank 110 via the tap 120, in a similar manner as in conventional water dispensing systems. In this example, the system 100 further includes a sensor 130 for detecting the presence of a potential user in proximity to the tap 120, and a temperature controller 140 that is configured to control a temperature of the water in the tank 110 based on input from the sensor 130.

In particular, the temperature controller 140 is configured so that, in a standby mode, the temperature controller 140 maintains the temperature of the water at a standby temperature that is closer to an ambient temperature than the dispensing temperature, and in response to the sensor 130 detecting the presence of a potential user in proximity to the tap, the temperature controller 140 adjusts the temperature of the water to the dispensing temperature. The mode in which the temperature of the water is adjusted to the dispensing temperature may be referred to as a dispensing mode.

For example, in the case of a hot water dispenser for dispensing water at a temperature greater than the ambient temperature, such as at a near-boiling temperature in the range of 94-99°C, when no potential users are detected in proximity to the tap 120 the temperature of the water may be maintained at a reduced standby temperature, such as in the range of 70-90°C, to thereby decrease the temperature differential compared to the ambient temperature and thus decrease heat losses from the tank. It will be appreciated that this will result in reduced energy consumption when maintaining the temperature of water at the standby temperature compared to the dispensing temperature. However, once a potential user is detected in proximity to the tap 120, the temperature controller 140 will cause the water to be heated to the dispensing temperature, ready for dispensing by the potential user.

Through appropriate selection of the elements of the system 100 and the standby temperature compared to the dispensing temperature, the system 100 may be capable of adjusting the temperature of the water from the standby temperature to the dispensing temperature with minimal delays, such that water can be available for dispensing at the dispensing temperature by the time the user reaches the tap 120 and uses the tap 120 to dispense water. Thus, the reduction of the temperature of the water to the standby temperature when a potential user is not in proximity to the tap 120 may not have a noticeable impact on the operation of the system 100 from a user's perspective, since the water is adjusted to the dispensing temperature in anticipation of the user using the tap 120.

Alternatively, in the case of a cold water dispenser for dispensing water at a temperature below the ambient temperature, such as at a chilled temperature in the range of 3-4°C, when no potential users are detected in proximity to the tap 120 the temperature of the water may be maintained at an elevated standby temperature, such as in the range of 8-10°C. It will be understood that this will result in reduced energy consumption when maintaining the temperature of water at the standby temperature compared to the dispensing temperature in a similar manner as discussed in the case of the hot water dispenser.

Accordingly, it will be appreciated that the above discussed functionality may be applied to water dispensing systems configured to dispensed hot or cold water under similar control strategies. Primary differences between hot or cold water implementations will be in the selection of the particular dispensing and standby temperatures and the configuration of the tank 110, i.e. whether the tank 110 is configured for heating or chilling the water stored within the tank 110.

An example temperature controller arrangement 300 for providing functionality as discussed above is illustrated in Figure 3. The temperature controller 140 is coupled to the sensor 130 and to the tank 130. In particular, the temperature controller 140 receives a sensor input 301 indicative of the presence of a potential user in proximity to the tap from the sensor 130, and provides a control output 302 to the tank 110, responsive to the sensor input 301.

The control output 302 may be provided in different forms depending on how the system 100, and especially the tank 110, is configured. In one example, the tank 110 may include its own temperature regulation capability and the temperature controller 140 may be configured to provide a control output 302 that is indicative of whether the tank is to regulate the temperature of the water at the standby temperature or at the dispensing temperature.

In another example, the temperature controller 140 may be configured to directly control the operation of a heater/chiller of the tank 110 (depending on whether the system 100 is for dispensing hot or cold water). Such arrangements may also involve feedback control of the temperature of the water in the tank 110, for example by providing a temperature sensor for sensing a measured temperature of the water in the tank 110 and having temperature controller 140 operate the heater/chiller based on the sensor input 301 and measured temperature input from the temperature sensor. More detailed examples of temperature controller arrangements will be described in due course.

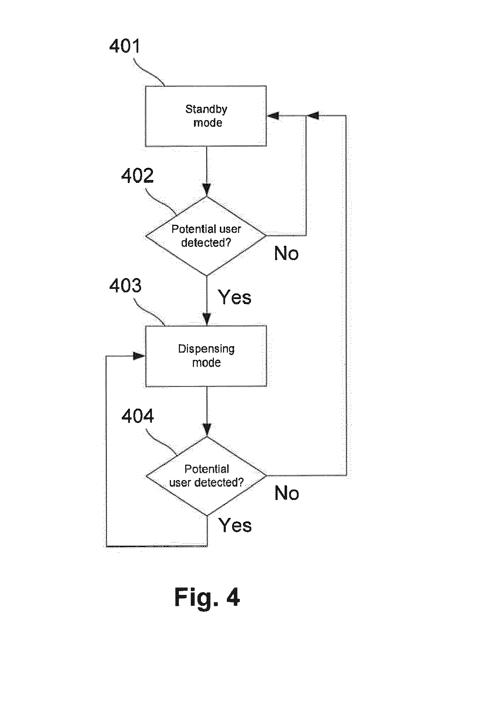

Figure 4 illustrates an example operation of the temperature controller 140 responsive to the sensor input 301 by showing transitions between the standby mode and the dispensing mode. At 401, the standby mode is activated such that the temperature controller 140 is maintaining the temperature of the water at a standby temperature. This standby temperature is maintained as long as no potential user is detected at 402. However, if a potential user is detected by the sensor 130 at 402, the dispensing mode is activated at 403 such that the temperature controller 140 will adjust the temperature of the water to the dispensing temperature. If the potential user (or another potential user) continues to be detected at 404, the system will stay in the dispensing mode and the temperature controller 140 will continue to maintain the temperature of the water at the dispensing temperature ready to be dispensed by the potential user. Otherwise, when no potential user is detected at 404, the standby mode will be activated at 401 and the temperature controller 140 will allow the temperature of the water to return to the standby temperature, and maintain the temperature of the water at the standby temperature until a potential user is once again detected at 402.

It is noted that, when the system is in the standby mode, the temperature of the water will typically be allowed to return to the standby temperature naturally, such as by natural cooling of the tank 110 of a hot water dispensing system or natural warming of the tank 110 of a cold water dispensing system, due to a temperature differential between the temperature of the water in the tank 110 and the ambient temperature. Once the temperature of the water has been allowed to naturally reach the standby temperature, the water in the tank 110 may be heated/chilled as required to maintain that standby temperature so as to offset further natural cooling/warming.

In any case, the temperature controller 140 will typically be provided as an electronic controller capable of receiving electronic input signal(s) and providing electronic output signal(s). Whilst suitable temperature controller 140 functionality may be provided in some simple cases using discrete circuit elements, the temperature controller 140 will typically be provided using one or more integrated circuits. Preferably, the temperature controller 140 will include an electronic processor such as a microprocessor or microcontroller configured to execute a control program for providing the required temperature control functionality. Such an arrangement allows flexibility in the operating parameters and in some examples can facilitate reprogramming of the temperature controller 140 to operate using different standby and dispensing temperatures, for instance.

Further optional features of the system 100 will now be outlined. Turning back to the example water dispensing system 100 as shown in Figure 1, it is noted that the system 100 is provided in a counter-mounted configuration in which the tap 120 is positioned above a counter-top 101 (typically adjacent to a sink or the like) whilst the tank 110 is positioned beneath the counter-top 101 to allow the tank 110 to be conveniently hidden from view. However, it will be appreciated that the system may be provided in other configurations, such as the wall-mounted configuration of Figure 2 which will be described further in due course.

In this example, the tap 120 is connected to the tank 110 using piping 111, which may be rigid or flexible depending on the installation of the system and respective positioning of the components.

The tap 120 includes an outlet 121 and a handle 122 couple to a tap body 123 for allowing a user to manually control the dispensing of water from the outlet 121 in the usual manner. The tap body 123 may be secured to the counter-top using a securing nut 124 on an under-side of the counter-top, which may be screwed onto a threaded portion of the tap body 123 extending through a hole in the counter-top 101.

In this example, the sensor 130 is integrated into the tap body 123, such that the sensor 130 is able to detect the presence of a potential user in proximity to the tap within a sensor rage 131. It will be noted that the sensor range 131 illustrated in Figure 1 is provided for facilitating understanding and the specific sensor range 131 in practical embodiments will depend on a range of factors including the type and sensitivity of the sensor 130. In any event, it will be appreciated that providing the sensor 130 as part of the tap 120 provides a convenient way of locating the sensor 130 in a position where potential users in proximity to the tap 120 are likely to be detected before the user attempts to dispense water from the tap 120.

In this example, the temperature controller 140 is shown as being co-located with the tank 110, although this is not essential and in other examples the temperature controller 140 may be provided with the sensor 130 or in any location provided the temperature controller 140 is suitably coupled to the sensor 130 and the tank 110 to allow control of the temperature of the water in the tank 110. In this example, the temperature controller 140 is coupled to the sensor 130 using wiring 132 which also passes into the tap 120 to connect to the sensor 130 inside the tap 120.

As mentioned above, Figure 2 shows another example of a water dispensing system 200, this time in a wall-mounted configuration. As per the previous example, the system 200 includes a tank 110, a tap 120, a sensor 130 and a temperature controller 140 which cooperate to provide a similar temperature control functionality as explained above. However in this example, the tap 120 is coupled directly to the tank 110 which is installed upon a wall 201, typically above a counter-top, in contrast to the split arrangement of the system 100.

In the wall-mounted system 200, the tap 120 similarly includes an outlet 121 and a handle 122 and in this case a tap body 123 extends directly from a surface 211 of the tank 110. The sensor 130 may be provided on the same surface 211, such as at a location above the tap 120 as shown, so that the sensor 130 is able to detect the presence of a potential user in proximity to the tap 120 within a sensor rage 131 in a similar fashion as discussed above.

In this case, the temperature controller 140 may be integrated inside the tank 110, such as behind a panel providing the surface 211 as shown, to allow convenient coupling with the sensor 130, although the particular location of the temperature controller 140 is not critical.

It will be appreciated from the above examples that the operational concept of the water dispensing system is readily applicable to a range of different types of conventional water dispensing systems.

Whilst the above examples include a sensor 130 that is integrated with other elements of the water dispensing system, such as the tap 120 or the tank 110, it should be understood that this is not essential, and the sensor 130 may be provided separately as long as it is suitably coupled to the temperature controller 140. For example, for a water dispensing system installed in a room such as a kitchen, the sensor 130 may be installed in any position in the room which allows reliable detection of the presence of potential users in proximity to the tap. In one example, the sensor may be configured to detect the presence of a potential user anywhere within the room, or within a sensor range 131 extending across an area near the tap 120.

Nevertheless, it will generally be convenient to integrate the sensor 130 with other system elements as this can facilitate easier installation, reduce manufacturing costs, and help to ensure that the operation of the system has reduced dependency on the particular installation of the system.

The particular type of sensor 130 is not particularly limited, provided the sensor 130 is capable of reliably providing a signal indicative of the presence of a potential user in proximity to the tap 120. For example, the sensor 130 may be suitably provided using a motion sensor, a proximity sensor, or a light sensor. These sensors may be configured to sense movement, body temperature, shadows, sound and transmit and receive signals reflected from a potential user.

Motion sensors have been found to be particularly effective, and in preferred embodiments, the sensor 130 is provided using a passive infrared motion sensor which can reliably detect the movement of potential users within a suitable range of the sensor 130, to facilitate adjustment of the temperature of the water to the dispensing temperature before the potential user is able to reach the tap 120 and attempt to dispense the water.

In some examples, the range of the sensor 130 may be adjustable to enable control over when the system to respond to the movement of potential users based on their proximity to the sensor 130. The range of the sensor 130 may be manually adjusted, although in more sophisticated embodiments, the range of the sensor 130 may be automatically adjusted based on whether detections of potential users lead to actual use of the system.

In particular, the temperature controller 140 may be configured to receive from the sensor 130 a sensor signal having a value that is indicative of a distance between the sensor 130 and a potential user detected by the sensor, and to compare the value of the sensor signal against a threshold value that corresponds to an operating range of the sensor 130. When a received sensor signal value exceeds the threshold value this indicates that a potential user is within the operating range such that the system should respond to the detection of the potential user. When a received sensor signal value is below the threshold value this indicates that a potential user is outside the operating range and the sensor signal may be disregarded as not involving the detection of the potential user.

However, the threshold value may be adjusted depending on whether a user actually uses the system to dispense water after detection. For instance, if a received sensor signal value exceeds the threshold value but this does not lead to actual usage of the system, this may indicate that the operating range is too long such that potential users are being falsely detected and the threshold value may be automatically reduced to a lower threshold value. On the other hand, if a received sensor signal value is below the threshold value and is disregarded, but the system is used to dispense water, then this may indicate that the operating range is too short such that potential users are being falsely disregarded and the threshold value may be automatically increased to a higher threshold value.

In further examples, the water dispensing system may include multiple sensors. In one example, the system may include a motion sensor and a proximity sensor, and the temperature controller 140 may be configured to adjust the temperature of the water to the dispensing temperature if one or both of the motion sensor and the proximity sensor detect the presence of a potential user. This can allow for improved reliability of operation through redundancy of sensor inputs.

Alternatively, multiple different sensor types may be used to facilitate more sophisticated temperature control functionality by allowing the use of different standby temperature levels based on particular combinations of sensor inputs.

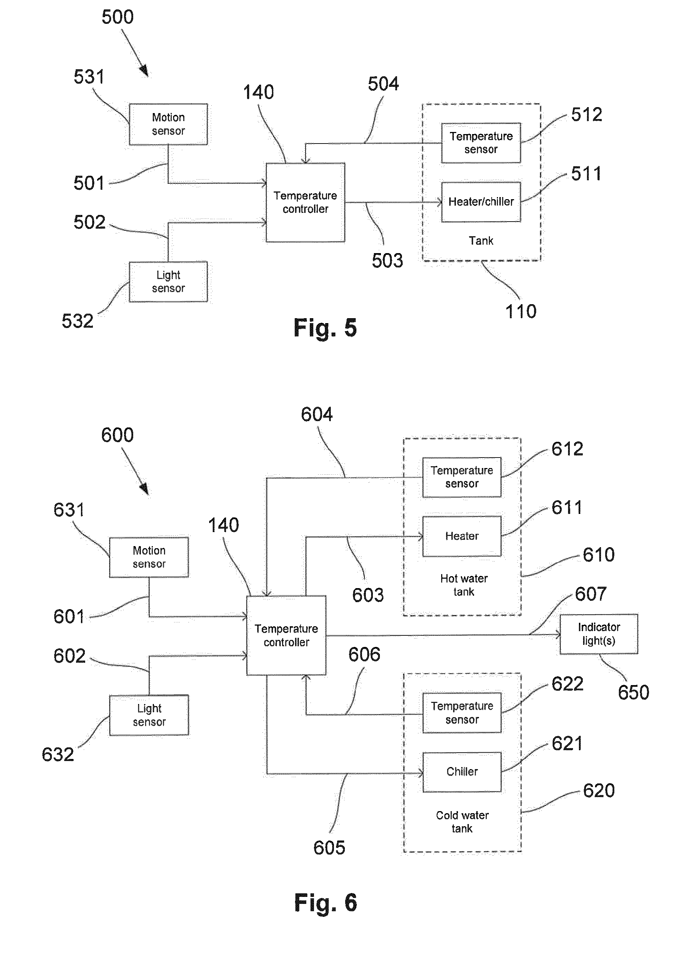

An example temperature controller arrangement 500 having two different types of sensors will now be described with reference to Figure 5. In this example, the temperature controller 140 is coupled to a motion sensor 531 and a light sensor 532. The temperature controller 140 is configured to receive inputs 501, 502 from each of these sensors 531, 532, and respond based on the particular combination of these inputs 501, 502. The temperature controller 140 receives from the motion sensor 531 a motion sensor input 501 indicative of motion in proximity to the tap 120 to thereby allow detection of the presence of a potential user. In addition, the temperature controller 140 receives from the light sensor 531 a light sensor input 502 indicative whether light is detected in proximity to the tap 120.

Whilst the light sensor input 502 does not necessarily correlate to the presence of a particular potential user in proximity to the tap 120 (for instance a light may be left on in the same room as the tap despite no potential users being present in the room), however, it does provide a useful indication of the likelihood of potential users being present nearby, such as in the building. For instance, when the lights are turned off in an office kitchen in which a water dispensing system is installed, such as outside of working hours, there is a high likelihood that there will not be any staff members using the water dispensing system. However, when the lights are turned on such that light is detected by the light sensor 532, this may be taken as an indication that staff members may be present in the building during operating hours. It will be appreciated that this will be an even more effective indication of the likelihood of potential users being nearby when the lights are operated automatically, based on predetermined office hours or staff activity.

This example temperature controller arrangement 500 also includes a temperature feedback control loop in which the temperature controller 140 provides a control output 503 to a heater/chiller 511 of the tank 110 (dependent on whether the system is provided for dispensing hot or cold water), which is determined at least partially based on the a temperature input 504 received from a temperature sensor 512 in the tank 110 to allow effective control of the temperature of the water.

As per the previous examples, the temperature controller 140 is configured to adjust the temperature of the water from a standby temperature to the dispensing temperature when the motion sensor 531 detects motion, which is indicative of the presence of a potential user. However, in this case the temperature controller 140 is configured so that different modes will be activated depending on whether or not light is detected.

For example, the temperature controller 140 may be configured to have the following behaviour. If light is not detected and a potential user is not detected, the temperature controller 140 enters a sleep mode. If light is sensed but a potential user is not detected, the sleep mode is activated, in which the temperature controller 140 maintains the temperature of the water at the standby temperature. However, if a potential user is detected the temperature controller 140 adjusts the temperature of the water to the dispensing temperature, irrespective of whether light is sensed.

Activation of the sleep mode will typically cause the temperature controller 140 to adopt a state in which energy is consumed at an even lower rate compared to the standby mode.

In one example, activation of the sleep mode causes the temperature controller 140 to allow the temperature of the water to approach the ambient temperature. In other words, the heater/chiller 511 for adjusting the temperature of the water in the tank 110 would be switched off completely and the temperature of the water allowed to naturally shift towards the ambient temperature, such as due to temperature differentials between the tank 110 and the environment. It will therefore be appreciated that no energy will be consumed by the heater/chiller 511 in the sleep mode of this example. Energy consumption will be limited to that required for maintaining operation of the temperature controller 140, sensors and other peripheral equipment.

Alternatively, in another example, activation of the sleep mode may cause the temperature controller 140 to maintain the temperature of the water at a sleep temperature that is closer to the ambient temperature than the standby temperature. This can allow more rapid system responsiveness when the water temperature needs to be adjusted to the standby temperature or the dispensing temperature, compared to the previous sleep mode example. Whilst this form of sleep mode will not entirely prevent energy consumption by the heater/chiller 511, the maintenance of a sleep temperature between the ambient temperature and the standby temperature will still result in reduced energy consumption compared to that required in standby mode. In any event, under this sleep mode regime, the heater/chiller 511 may still be switched off for significant periods of time as the temperature of the water is allowed to naturally approach the sleep temperature from the standby temperature.

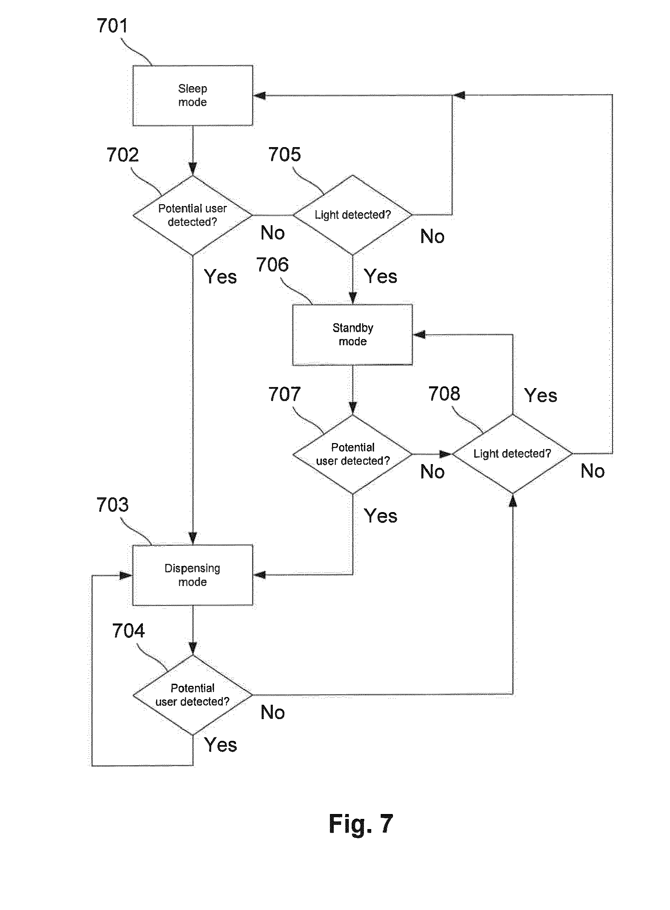

Figure 7 illustrates an example operation of the temperature controller 140 responsive to the motion sensor input 501 and the light input 502, particularly showing transitions between the sleep mode, the standby mode and dispensing temperature.

At 701, the temperature controller 140 is in the sleep mode and is thus either allowing the temperature of the water to approach the ambient temperature or otherwise maintaining the temperature of the water at the sleep temperature, depending on the desired operation of the system in the sleep mode. Sleep mode remains active as long as no potential user is detected at 702 and no light is detected at 705. However, if a potential user is detected by the motion sensor 531 at 702, the dispensing mode will be activated at 703 such that the temperature controller 140 will adjust the temperature of the water directly to the dispensing temperature.

If the potential user (or another potential user) continues to be detected at 704, the dispensing mode will remain active and the temperature controller 140 will continue to maintain the temperature of the water at the dispensing temperature, ready to be dispensed by the potential user. Otherwise, when no potential user is detected at 704, and if no light is detected at 708, the sleep mode will be reactivated at 701 so that the temperature controller 140 will allow the temperature of the water to naturally rise/fall towards the ambient temperature (depending on whether the system is a hot or cold water dispensing system). As mentioned above, in some examples, the temperature controller 140 may maintain the temperature of the water at a sleep temperature between the ambient temperature and the standby temperature to allow improved responsiveness.

It will be appreciated that this type functionality based on the presence of a potential user is generally similar to the functionality of the previous example systems without a light sensor 532. However, a different layer of functionality will be triggered when light is detected. For instance, if no potential user is detected at 702 but light is detected at 705, the system will transition from the sleep mode at 701 to the standby mode at 706 such that the temperature controller 140 will adjust the temperature of the water to the standby temperature. It will be appreciated that this adjustment could involve heating/chilling the water from a temperature between the ambient temperature (or a sleep temperature in some cases) and the standby temperature, depending on how much time has elapsed since sleep mode was last activated.

As long as a potential user is not detected at 707 and light is still detected at 708, the temperature controller 140 will continue to maintain the temperature of the water at the standby temperature in the standby mode at 706. Thus the temperature of the water can be maintained at a level that is closer to the dispensing temperature whilst lights are on and there is an increased likelihood of potential users being nearby.

When a potential user is detected at 707 whilst the temperature controller 140 is in the standby mode at 706 and maintaining the temperature of the water at the standby temperature, the dispensing mode will be activated at 703 such that the temperature controller 140 will adjust the temperature of the water to the dispensing temperature. It will be appreciated that this adjustment to the dispensing temperature from the standby temperature will be more rapidly achieved compared to the adjustment to the dispensing temperature from the temperature of the water whilst sleep mode is activated, due to the reduced temperature difference.

From the above, it will be appreciated that the use of a motion sensor 531 and a light sensor 532 to allow transitioning of the temperature controller 140 between the sleep mode, the standby mode and the dispensing mode can facilitate even further improved reductions in energy consumption whilst allowing water to be dispensed at the dispensing temperature on demand. Waiting times for the temperature of the water to be adjusted from energy saving temperatures in the sleep or standby modes at the time a user operates the tap 120 can be significantly reduced or avoided, since potential users can be more readily anticipated by the system.

As mentioned above, in some examples the sleep mode can involve maintaining the temperature of the water a the sleep temperature, which can be set at a level closer to the ambient temperature compared to the standby temperature, so that energy consumed to maintain the sleep temperature will be relatively low during times when the lights are off and potential users are unlikely to be nearby. In the case of a hot water dispenser for dispensing water at a near-boiling dispensing temperature in the range of 94-99°C, the sleep temperature can be set, for example, in the range of 40-70°C, whilst the standby temperature can be set, for example, in the range of 70-90°C, as per the previous examples.

Alternatively, the sleep mode can involve simply turning off the heater/chiller 511 to allow the temperature of the water to naturally fall/rise all the way to the ambient temperature.

In either case it will be appreciated that the time taken for the temperature of the water to reach the sleep temperature or the ambient temperature after sleep mode is activated may be significant particularly where the tank 510 is well insulated against natural cooling/heating due to temperature differentials compared to the ambient temperature. Thus, the actual temperature of the water during sleep mode may actually be relatively close to the standby temperature and dispensing temperature if insufficient time has passed since activation of the sleep mode to allow a large natural temperature change to occur.

Even when the lights are on such that sleep mode will be deactivated, substantial energy consumption savings can still be realised by maintaining the temperature of the water at the standby temperature rather than the dispensing temperature, whilst still allowing the system to anticipate demand by adjusting the temperature of the water to the dispensing temperature when the presence of a potential user is detected.

Accordingly, the above described temperature controller arrangement 500 allows for energy savings similar to those achievable in water dispensing systems having timer-controlled standby modes during traditionally low-demand times, but with enhanced responsiveness to demands on the system at any time, along with the ability to also achieve energy savings during traditionally higher-demand times by only having the temperature of the water reach the dispensing temperature when a potential user is actually present.

Figure 6 shows a further example of a temperature controller arrangement 600 similar to that described above with regard to Figures 5 and 7. The temperature controller 140 receives motion sensor input 601 from a motion sensor 631 and light sensor input 632 from a light sensor 632 as per the previous example, but in this example the temperature controller 140 is configured to control the temperature of water in each of a hot water tank 610 and a cold water tank 620.

The hot water tank 610 includes a heater 611 and a temperature sensor 612, and the temperature controller 140 is configured to provide a heater control output 603 for controlling the operation of the heater 611 to maintain or adjust the temperature of the water in the hot water tank 610 based on the motion sensor input 601 and the light sensor input 632, and using feedback of a temperature input 604 from the temperature sensor 612. Similarly, the cold water tank 620 includes a chiller 621 and a temperature sensor 622, and the temperature controller 140 is configured to provide a chiller control output 606 for controlling the operation of the chiller 611 to maintain or adjust the temperature of the water in the hot water tank 610 based on the motion sensor input 601 and the light sensor input 632, and using feedback of a temperature input 605 from the temperature sensor 622.

The temperature controller 140 may also be coupled to one or more indicator lights 650 which can be selectively activated by a light control output 607 provided by the temperature controller 140. These indicator lights 650 may be used to indicate whether the hot water tank 610 and/or the cold water tank 620 is currently at the dispensing temperature, or alternatively whether the temperature controller 140 is in the sleep mode or the standby mode.

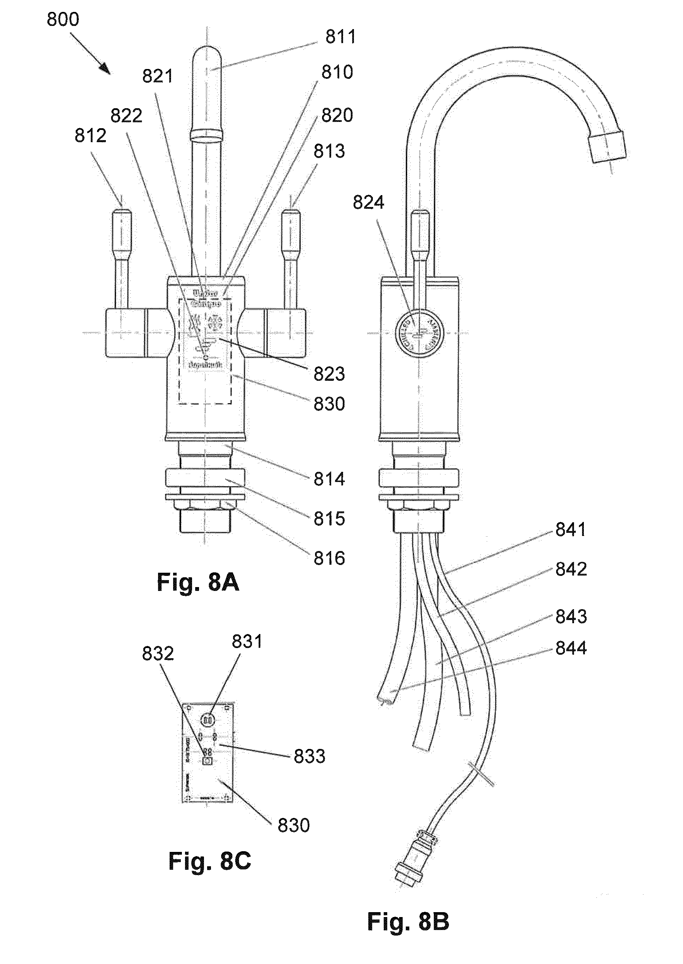

An example of a practical embodiment of a tap assembly 800 of a water dispensing system will now be described with reference to Figures 8A to 8C.

As shown in Figure 8A, the tap assembly 800 includes a tap body 810, an outlet 811 extending from the body 810, a cold water handle 812, a hot water handle 813, and a mounting portion 814 upon which a spacer 815 and securing nut 816 may be used to secure the tap body 810 to a counter-top when the tap assembly 800 is installed.

With reference to Figure 8B, this tap assembly 800 is configured to dispense water at a near boiling dispensing temperature from a hot water tank via a hot water pipe 844, water at a cold dispensing temperature from a cold water tank via a cold water pipe 843, and filtered water at an ambient temperature from an ambient water pipe 842. Control wiring 841 is also provided between the tap assembly 800 and the controller (not shown).

The cold water handle 812 can be used to dispense water at the cold dispensing temperature when rotated in one direction and to dispense water at the ambient temperature when rotated in the other direction. The hot water handle 813 can be used to dispense water at the hot dispensing temperature. Water can also be dispensed at intermediate warm temperatures by simultaneously using the hot water handle 813 and the cold water handle 812 to thereby mix streams of water at the hot dispensing temperature and the ambient temperature.

Turning back to Figure 8A, the tap assembly 800 includes an external label 820 and an internal circuit board 830 which is marked in dashed lines in Figure 8A but shown in detail in Figure 8C. A motion sensor 831 and a light sensor 832 are mounted on the circuit board, along with indicator lights 833 which are selectively activated to indicate whether water is available at the hot or cold dispensing temperatures. The label 820 includes transparent sensor windows 821, 822 corresponding to the positions of the sensors 831, 832, for allowing the internally mounted sensors 831, 832 to receive light or other stimulus through the sensor windows 821, 822. The label 820 also includes light windows 823 corresponding to the positions of the indicator lights 833.

In this example, the controller is located under the counter, usually near the tanks, and communicates with the sensors 831, 832 and indicator lights 833 via the control wiring 841 which is connected to the circuit board 830. However, in alternative arrangements the controller may also be mounted on the circuit board 830 and may instead communicated with the heater, chiller and respective temperature sensors of the tanks via the control wiring 841.

In any event, it will be appreciated that the example water dispensing system arrangements described above enable energy consumption to be reduced when potential users are not present, yet allow improved responsiveness at any time by pre-emptively adjusting the temperature of the water when a potential user is detected. Embodiments of the system makes use of one or more sensors to sense when a potential user is in proximity of the dispensing tap, so as to ensure water is ready for dispensing before the tap is actually operated by the use.

To summarise, it will be understood that the system may enter an energy saving standby mode the moment the user releases the tap and moves sufficiently far away from the tap, thus allowing energy savings to be realized immediately after use. The system may also advantageously utilise more than one standby temperature level dependent on status or combination status of the sensors. For instance, in some embodiments, if no user is detected near the tap, and no light is detected, the system may enter a sleep mode in which the temperature of the water is allowed to naturally fall/rise towards the ambient temperature to achieve further improved energy savings in periods when demand for water at the dispensing temperature is unlikely. However, on detecting a sensor input indicative of the presence of a potential user, the system may immediately resume from the standby or sleep mode to adjust the temperature of the water back to the dispensing temperature.

Alternative embodiments of the water dispensing system may be provided in which sleep mode can be activated based on different criteria, compared to the light sensor arrangements described above.

In one example, the temperature controller 140 may be further configured so that, when a potential user is not detected in proximity to the tap 121, the temperature controller 140 selectively activates the standby mode or the sleep mode based on a usage profile. The system may still include a sensor 130 for detecting the presence of a potential user in proximity to the tap 121, such as a motion sensor 531 as discussed above, and have the temperature controller 140 configured to respond to the sensor 130 detecting the presence of a potential user in proximity to the tap 121 by adjusting the temperature of the water to the dispensing temperature. However, it should be understood that some systems may be provided which have operation controlled by a usage profile without necessarily requiring a sensor, as will be described in further detail in due course.

As per previous examples, activation of the sleep mode, activation of the sleep mode may cause the temperature controller to either allow the temperature of the water to approach the ambient temperature or maintain the temperature of the water at a sleep temperature that is closer to the ambient temperature than the standby temperature, depending on requirements of the system.

In some embodiments of systems in which the sleep mode is activated based on a usage profile, the usage profile may define one or more usage windows in a predetermined time period, and the system may further include a clock for allowing a current time to be determined relative to the predetermined time period, so that the temperature controller 140 can selectively activating the standby mode or the sleep mode based on whether the current time falls inside a usage window. For example, the temperature controller 140 may be configured so that the sleep mode is activated at all times outside of usage windows as long as a potential user is not detected in proximity to the tap.

The clock can be a continuous real time clock for determining a precise current time and potentially a date, although in some examples the clock may be provided using a counter or timer which can determine the passage of time predetermined increments, such as an hour.

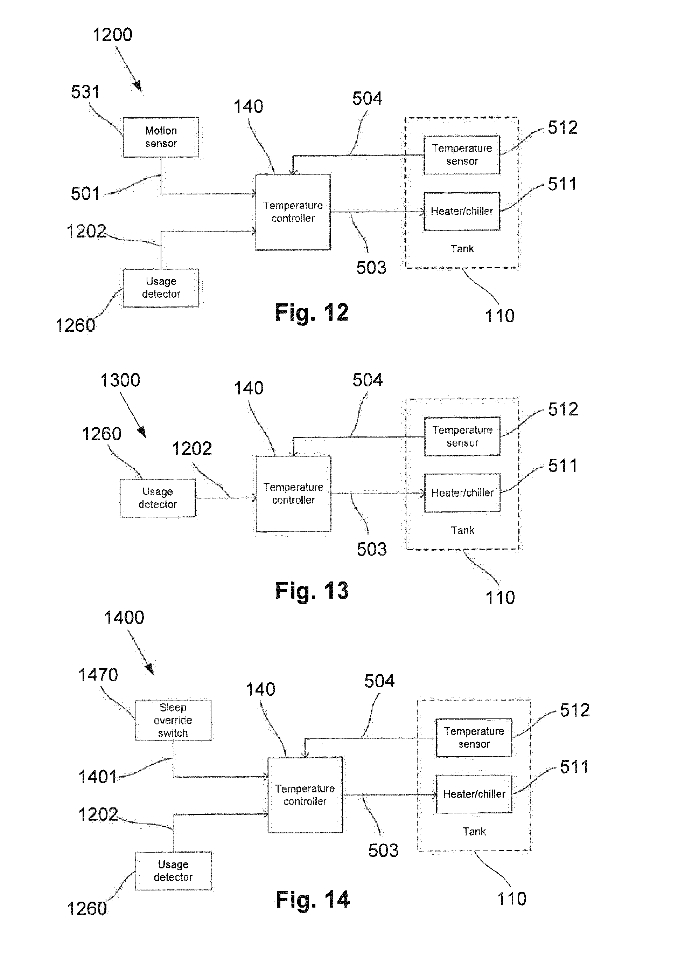

An illustrative example of a usage profile 900 is depicted in Figure 12 and will now be described in further detail. The usage profile may includes a plurality of time blocks 901 within the predetermined time period and usage windows may be defined by setting each time block 901 as a usage time block (indicated as hatched time blocks 901) or a sleep time block (indicated as empty time blocks 901).

In this example, the usage profile 900 covers a predetermined time period of a week and defines usage windows based on time blocks 901 of one hour. For example, on Monday a first usage window 910 extends from 8am to 6pm, and on Tuesday a second usage window 911 extends from 6am to 10am and a third usage window 912 extends from 12pm to 6pm. Empty time blocks 901 outside of the usage windows 910, 911, 912 are sleep time blocks as mentioned above and may be defined between usage windows 911, 912 on the same day as indicated at 920. As can be seen, the usage windows can cover different periods of time on different days to reflect, for example, different working hours or other usage trends, and on some days, such as Sunday, the usage profile 900 may include no usage windows such that the sleep mode will be activated throughout the entire day by default.

The temperature controller may be configured to have the following behaviour based on the combination of the sensor 130 and usage profile 900 functionalities. If a potential user is not detected and the current time does not fall inside a usage window, the sleep mode is activated. If a potential user is not detected and the current time falls inside a usage window, the standby mode is activated, However, if a potential user is detected at any time, the temperature controller 140 will adjust the temperature of the water to the dispensing temperature. Although there might be a delay in bringing the temperature of the water to the dispensing temperature if a potential user is detected after an extended period of sleep mode activation, this is unlikely to occur regularly assuming the usage profile has appropriately defined usage windows, that that the standby mode should typically be activated throughout times when potential users are most likely to be detected.

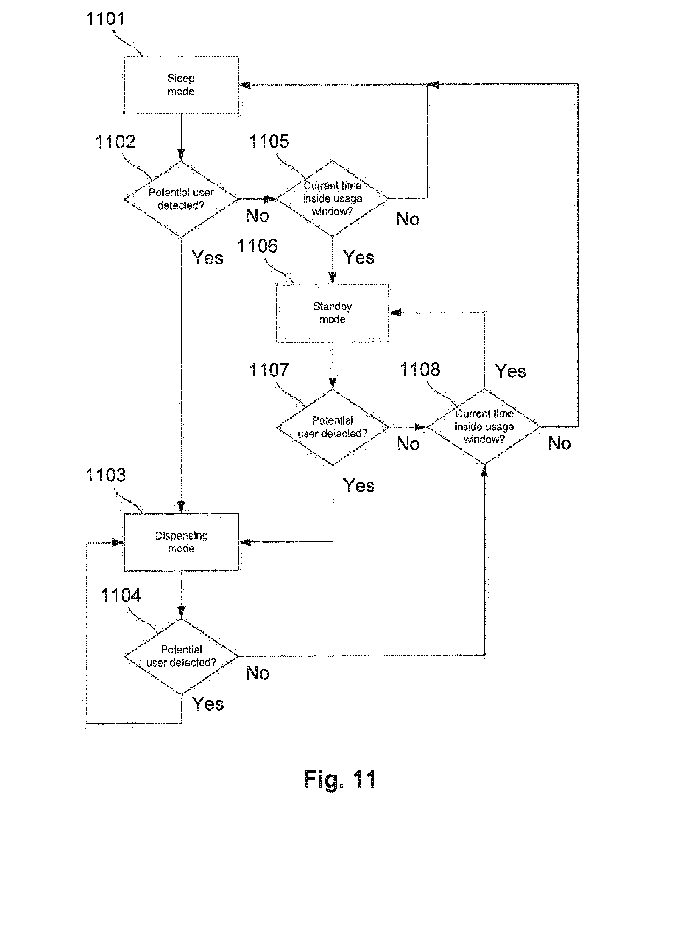

Figure 11 illustrates an example operation of the temperature controller 140 responsive to the motion sensor input 501 and having standby mode or sleep mode activated based on a usage profile 900, particularly showing transitions between the sleep mode, the standby mode and dispensing temperature. It will be appreciated that this example is generally similar to the example operation depicted in Figure 7, but with activation of sleep mode or standby mode being based on a comparison of the current time against usage windows of the usage profile 900 rather that based on whether light is detected.

For the sake of providing a starting point for this example it is assumed that the current time is outside of any usage windows and thus the temperature controller 140 is in the sleep mode at 1101. This mode will be maintained as long as no potential user is detected at 1102 and the current time remains outside of any usage windows at 1105. However, if a potential user is detected at 1102, the dispensing mode will be activated at 1103.

If the potential user (or another potential user) continues to be detected at 1104, the dispensing mode 1103 will remain active and the temperature controller 140 will continue to maintain the temperature of the water at the dispensing temperature, ready to be dispensed upon use of the tap 121 by the potential user. Otherwise, when no potential user is detected at 1104, and if the current time is still outside of any usage windows at 1108, the sleep mode will be reactivated at 1101, allowing the temperature of the water to naturally rise/fall towards the ambient temperature (or sleep temperature depending on the system requirements), thus immediately reducing energy consumption.

If no potential user is detected at 1102 but the current time enters a usage window at 1105, the system will transition from the sleep mode at 1101 to the standby mode at 1106 such that the temperature controller 140 will adjust the temperature of the water to the standby temperature. As long as a potential user is not detected at 1107 and the current time remains inside a usage window at 1108, the temperature controller 140 will continue to maintain the temperature of the water at the standby temperature in the standby mode at 1106, so that the temperature of the water can be maintained at a level that is closer to the dispensing temperature when the usage profile indicates that there is an increased likelihood of potential users being nearby. When a potential user is detected at 1107 whilst the temperature controller 140 is in the standby mode at 1106, the dispensing mode will be activated at 1103, to allow the potential user to dispense water at the dispensing temperature.

It will be appreciated that similar principles may be applied irrespective of the duration of the time blocks or overall predetermined time period of the usage profile 900. However, it will be appreciated that a weekly predetermined time period as shown may be convenient for controlling operation of the system based on the usage profile for a typical working week, and hourly time blocks may provide sufficient resolution for controlling the activation of sleep mode to save energy consumption outside of the usage windows.

Nevertheless, shorter time blocks 901 may be defined to allow more precise control of the sleep mode activation throughout the predetermined time period covered by the usage profile 900. In other examples, the usage profile 900 may be defined continuously over the predetermined time period, rather than in time blocks, with the usage windows 910, 911, 912 being defined with more precise start and finish times than may be attainable using time blocks 901 of a set duration.

In preferred embodiments, the system will have a learning functionality such that the usage profile 900 may be initially defined and/or updated in accordance with real usage of the system. For example, the usage profile 900 may be initially defined in a learning period of operation spanning one or more of the predetermined time periods covered by the usage profile 900 (such as one or more weeks), in which usage of the system is monitored and the usage windows may be defined accordingly to cover periods of time in which the system is most likely to be used in future iterations of the predetermined time periods (i.e. in subsequent weeks of operation).

For instance, the system may establish that during this learning period, that the last use of the system on a particular day is 5.30pm and the first use the following day is 7.45 am. It will also establish for example that the system is not used over the weekend. The usage profile 900 would then be updated to set the usage windows based on this use, and in turn establish periods of reduced power consumption operation when sleep mode is activated outside of these usage windows. For example, in this instance the usage profile may cause sleep mode to be activated between 6pm and 7am the following morning. The system would also activate the sleep mode for the entire period over the weekend. During the usage windows, the system would activate the standby mode unless motion is detected.

As the system continues to be operated, the usage profile 900 may be progressively updated to reflect changes in the usage of the system over time, so as to ensure that the system continues to activate sleep mode or standby mode at appropriate times based on recent usage trends.

In one example of the system 1200 as depicted in the block diagram of Figure 12, the system may further include a usage detector 1260 for detecting when water is dispensed by the system. In this case the usage detector 1260 provides a usage signal 1202 to the temperature controller 140. The system 1200 may be then be configured to determine, using the usage detector 1260, one or more usage events and update the usage profile 900 based on the one or more usage events. It will be understood that this process can also allow the definition of usage windows in a new usage profile 900 during an initial learning period of operation.

The usage detector 1260 may be provided in a variety of different forms, depending the specific configuration of the system 1200. For example, the system 1200 may include one or more sensors for detecting one or more of operation of the tap 121, flow of water through a valve, the release of water from the tank 110, replenishment of dispensed water into the tank 110, or other events indicative of water being dispensed. Those skilled in the art will appreciate that some conventional systems are already provided with suitable sensing arrangements for detecting usage of the system, such as to ensure the system does not remain inactive for excessively long periods to avoid bacterial build up or the like. Accordingly, existing systems may already include suitable usage detectors 1260, although in some examples, a dedicated usage detector 1260 may be provided for the purpose of enabling the self learning functionality mentioned above.

In one example, updating the usage profile 900 may include the following procedure. First, a usage event is determined, along with a usage time corresponding to the usage event. The usage time is then compared to the one or more usage windows defined in the usage profile 900 (noting that in a new profile during an initial learning period of operation there may be no usage windows defined). If the usage time does not fall inside a usage window, then a usage window may be added or adjusted to cover the usage time corresponding to the detected usage event.

In some examples, the system may be configured so that the usage profile 900 is not necessarily updated for every single usage event, so that outlying usage events may be discounted, so that sleep mode can be maintained in periods where usage is less likely based on the monitored usage.

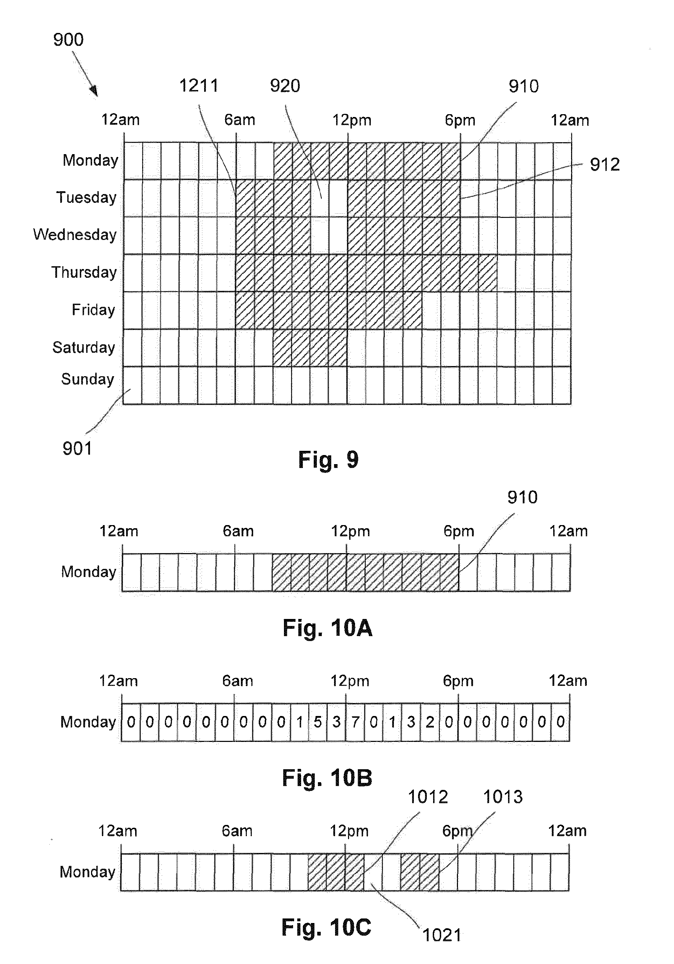

For example, the usage profile 900 of Figure 9 can be updated by monitoring the usage within each time block 901 and assessing whether the amount of usage justifies an update to the usage profile 900.

This may involve, for a particular time block 901, determining a number of usage events within the time block 901, and setting the time block 901 as a usage time block or a sleep time block based on the number of usage events. In particular, if the number of usage events exceeds a usage threshold, the time block 901 would be set as a usage time block, and if the number of usage events does not exceed the usage threshold, the time block 901 would be set as a sleep time block in which sleep mode will be activated.

An example of this functionality will now be described with regard to Figures 10A to 10C. A extracted portion of the usage profile 900 for Monday is shown in Figure 10A, including a currently defined usage window 910 extending between 8am and 6pm. Usage of the system is monitored on a Monday to determine the number of usage events in each time block 901, as indicated in Figure 10B. The number of usage events in each time block will be compared against a suitably defined usage threshold and the time blocks 901 set as usage time blocks or sleep time blocks accordingly. In this case, the usage threshold is set so that a time block 901 will be set as a usage time block if two or more usage events are detected in the time block 901. This allows single outlying usage events to be discarded so that the system activates sleep mode more aggressively than would be the case without considering the usage threshold.

The resulting new usage windows 1012, 1013 resulting from the comparison of monitored usage of Figure 10B against the usage threshold is shown in Figure 10C. As can be seen, these will result in sleep mode being maintained until 10am and also activated in the middle part of the day between 1pm and 3pm, where only minimal usage is expected based on the fact that only one usage event had occurred in the 2pm-3pm time block. However, the system will exit sleep mode between 3pm and 5pm in view of slightly higher usage in this period, and sleep mode will reactivate after 5pm since no usage was monitored after that time.

In summary, in the system 1200 as described above, the system 1200 includes a means of monitoring dispenser usage over a period of time to define a usage profile, and utilises this usage profile to activate the sleep mode outside periods of use. The system 1200 may operate over an initial learning period of typically four weeks in which usage may be monitored to establish an initial usage profile 900. In some examples, the usage profile may be defined by average usage across the initial learning period. Subsequent ongoing updates to the usage profile may be made based on further continuous monitoring of usage of the system. It will be understood that in some embodiments the updates may be determined by considering a combination of the current usage profile and the monitored usage, so as to place more weight on the usage profile established over potentially weeks of previous usage, rather than only the most recent usage of the system.

In other words, the system 1200 is adapted to learn over a period of time how the heater/cooler is used to allow the current mode of the system 120 to be set to reduce power consumption in known low-usage periods but anticipate expected usage of the system in known higher-usage periods. This is accomplished by monitoring the system 1200 through tap use, water replacement or the like, and establishing a usage profile which is used to control the activation of the sleep mode or the standby mode. If motion is detected at any time while in the sleep mode, the system 1200 will proceed to heat or chill as applicable to achieve the dispensing temperature.

Whilst the above examples have focussed on water dispensing systems having a sensor 130 for detecting the presence of a potential user in proximity to the tap 121, it will be understood that the above discussed self learning functionality may be beneficial even if the sensor 130 is not provided to anticipate potential usage of the system.

Accordingly, in an alternative aspect, a water dispensing system 1300 for dispensing water at a dispensing temperature may be provided as shown in Figure 13, in which no sensor is provided but a usage detector 1260 is still provided to allow the usage profile to be initially defined and updated based on monitored usage of the system 1300.

In particular, the system 1300 may include a temperature-controlled tank 110 for storing water, a tap 121 for allowing water to be dispensed from the tank 110 via the tap 121, a usage detector 1260 for detecting when water is dispensed, a clock for determining a current time and a temperature controller 140 for selectively adjusting a temperature of the water to the dispensing temperature. The clock may be provided, for example, as an internal clock or timer of the temperature controller 140. The temperature controller 140 is configured to activate a sleep mode based on a usage profile 900 defining one or more usage windows in a predetermined time period, and activates the sleep mode if the current time does not fall inside a usage window. The system 1300 is further configured to determine, using the usage detector 1260, one or more usage events and update the usage profile 900 based on the one or more usage events.

The operation of the system 1300 may otherwise be similar to that described above, aside from the actions based on inputs from the sensor. Activation of the sleep mode typically causes the temperature controller to either allow the temperature of the water to approach the ambient temperature or maintain the temperature of the water at a sleep temperature that is closer to the ambient temperature than the dispensing temperature.

In simple embodiments the system 1300 will transition between sleep mode and a dispensing mode at which the temperature controller adjusts the temperature of the water to the dispensing temperature.

It will be appreciated that incorporating a sensor for detecting the presence of a potential user in proximity to the tap, such as a motion sensor as discussed above, into this system 1300 can allow functionality as described in earlier examples for allowing the system 1300 to anticipate potential use of the system. However, a sensor is not necessarily required when the system 1300 uses the usage profile. For instance, the system 1300 may be configured to enter the dispensing mode during all usage windows so that the system 1300 can immediately respond to demands for water at the dispensing temperature during known periods of use.

In another embodiment of the system 1400, as shown in Figure 14, the system 1400 further includes a sleep override switch 1470, and the temperature controller 140 is configured so that, when a user uses the sleep override switch 1470, the sleep mode is deactivated and the temperature controller 140 adjusts the temperature of the water to the dispensing temperature, allowing water to be dispensed at the dispensing temperate outside of usage windows.

It will be understood that the sleep override switch 1470 may function in a similar manner as the sensor in earlier examples, such that the system will transition to a dispensing mode in which the temperature controller adjusts the temperature of the water to the dispensing temperature in anticipation of the water actually being dispensed by the user. Accordingly, this provides the user with the capability to manually wake the system 1400 from the sleep mode at times outside of the usage windows defined by the usage profile, so that the water can be brought to the dispensing temperature before the user actually uses the tap 121 to dispense the water. The temperature controller 140 may be configured to maintain the temperature of the water at the dispensing temperature for a predetermined period of time after use of the sleep override switch 1470, before allowing the system to revert to the sleep mode.

The temperature controller 140 may be further configured to activate a standby mode if the current time falls inside a usage window and the sleep override switch is not used, such that, in the standby mode, the temperature controller maintains a temperature of the water at a standby temperature that is closer to an ambient temperature than the dispensing temperature. The functionality for transitioning between the sleep mode and the standby mode may be similar to that discussed above in previous examples.

Thus, in one example implementation of the system 1400, the temperature controller 140 may be configured as follows. If the sleep override switch 1470 is not used and the current time does not fall inside a usage window, the sleep mode is activated. If the sleep override switch 1470 is not used and the current time falls inside a usage window, the standby mode is activated. If the sleep override switch 1470 is used at any time, the temperature controller 140 adjusts the temperature of the water to the dispensing temperature.

Otherwise, it will be appreciated that the process of updating the usage profile 900 in embodiments of the system 1300 or 1400 can be implemented as described above, particularly with regard to description of the system 1200 as depicted in Figure 12 and the illustrative example of updates to the usage profile 900 as depicted in Figures 10A to 10C.

In another example, any of the above discussed examples of the water dispensing system may include a sensor override switch (not shown) which allows the sensor 130 functionality of the system to be temporarily disabled. This can be useful for preventing the system from detecting and responding to the presence of a potential user in proximity to the tap 120 at times when it may not desirable to do so. In particular, using the sensor override switch will stop the temperature controller 140 from adjusting the temperature of the water to the dispensing temperature every time a potential user moves in proximity to the tap 120.

For example, the sensor override switch might be manually activated during warm periods of the day when hot water is not expected to be needed by potential users, thereby forcing the system to maintain the standby mode and save energy even when potential users are moving in proximity to the tap 120. In the event a user does require hot water, the user can deactivate the sensor override switch, at which time their presence in proximity to the tap 120 will be detected by the sensor 130 and cause the temperature controller 140 to respond by adjusting the temperature of the water to the dispensing temperature.

The sensor override switch may be conveniently implemented as a button on the tap 120 or as a function of a handle or a lever of the tap 120. In one example, the sensor override switch could be provided for a hot water dispensing system in which a user is required to pull a lever to cause hot water to be dispensed, by requiring the user to push the lever in an opposite direction to activate the sensor override switch. In this manner, the user can intuitively confirm that hot water is not required by engaging in an opposing action compared to that used for dispensing hot water.

In any case, it will thus be appreciated that the water dispensing system embodiments discussed above provide the benefits of optimised energy saving without the down time or significant delays associated with other energy saving measures implemented in conventional water dispensing systems.

Throughout this specification and claims which follow, unless the context requires otherwise, the word "comprise", and variations such as "comprises" or "comprising", will be understood to imply the inclusion of a stated integer or group of integers or steps but not the exclusion of any other integer or group of integers.

Persons skilled in the art will appreciate that numerous variations and modifications will become apparent. All such variations and modifications which become apparent to persons skilled in the art, should be considered to fall within the spirit and scope that the invention broadly appearing before described.

## Claims

1. A water dispensing system for dispensing water at a dispensing temperature, the system including:
a) a temperature-controlled tank for storing water;
b) a tap for allowing water to be dispensed from the tank via the tap;
c) a sensor for detecting the presence of a potential user in proximity to the tap; and,
d) a temperature controller configured so that, in a standby mode, the temperature controller maintains a temperature of the water at a standby temperature that is closer to an ambient temperature than the dispensing temperature, and in response to the sensor detecting the presence of a potential user in proximity to the tap, the temperature controller adjusts the temperature of the water to the dispensing temperature.

2. A system according to claim 1, wherein:
a) the dispensing temperature is greater than the standby temperature, and the tank includes a heater for heating the water responsive to a control input from the temperature controller; or,
b) the dispensing temperature is less than the standby temperature, and the tank includes a chiller for chilling the water responsive to a control input from the temperature controller.

3. A system according to claim 1 or claim 2, wherein the sensor is one of:
a) a motion sensor;
b) a proximity sensor; and,
c) a light sensor.

4. A system according to any one of claims 1 to 3, wherein:
a) the sensor is mounted on the tap; or,
b) the tap is mounted on the tank and the sensor is mounted on the tank.

5. A system according to any one of claims 1 to 4, wherein the temperature controller is configured so that the standby mode is activated when a potential user is not detected in proximity to the tap.

6. A system according to any one of claims 1 to 5, wherein the sensor is a motion detector and the system further includes a light sensor, and the temperature controller is configured to control the temperature of the water based on a combination of inputs received from the motion sensor and the light sensor, wherein the temperature controller is configured so that a sleep mode is activated when light is not sensed and a potential user is not detected in proximity to the tap, and wherein activation of the sleep mode causes one of:
a) the temperature controller allowing the temperature of the water to approach the ambient temperature; and,
b) the temperature controller maintaining the temperature of the water at a sleep temperature that is closer to the ambient temperature than the standby temperature.

7. A system according to claim 6, wherein the temperature controller is configured so that:
a) if light is not sensed and a potential user is not detected, the sleep mode is activated;
b) if light is sensed and a potential user is not detected, the standby mode is activated;
and,
c) if a potential user is detected, the temperature controller adjusts the temperature of the water to the dispensing temperature.

8. A system according to any one of claims 1 to 4, wherein the temperature controller is configured so that, when a potential user is not detected in proximity to the tap, the temperature controller selectively activates the standby mode or a sleep mode based on a usage profile, and wherein activation of the sleep mode causes one of:
a) the temperature controller allowing the temperature of the water to approach the ambient temperature; and,
b) the temperature controller maintaining the temperature of the water at a sleep temperature that is closer to the ambient temperature than the standby temperature.

9. A system according to claim 8, wherein the usage profile defines one or more usage windows in a predetermined time period and the system further includes a clock for allowing a current time to be determined relative to the predetermined time period, the temperature controller selectively activating the standby mode or the sleep mode based on whether the current time falls inside a usage window.

10. A system according to claim 9, wherein the temperature controller is configured so that:
a) if a potential user is not detected and the current time does not fall inside a usage window, the sleep mode is activated;
b) if a potential user is not detected and the current time falls inside a usage window, the standby mode is activated; and,
c) if a potential user is detected, the temperature controller adjusts the temperature of the water to the dispensing temperature.

11. A system according to any one of claims 1 to 4, wherein the system further includes:
a) a usage detector for detecting when water is dispensed; and,
b) a clock for determining a current time and wherein the temperature controller is configured to activate a sleep mode based on a usage profile defining one or more usage windows in a predetermined time period, the temperature controller activating the sleep mode if the current time does not fall inside a usage window, wherein activation of the sleep mode causes one of:
i) the temperature controller allowing the temperature of the water to approach the ambient temperature; and,
ii) the temperature controller maintaining the temperature of the water at a sleep temperature that is closer to the ambient temperature than the dispensing temperature.

12. A system according to claim 11, wherein the system further includes a sleep override switch, and the temperature controller is configured so that, when a user uses the sleep override switch, the sleep mode is deactivated and the temperature controller adjusts the temperature of the water to the dispensing temperature, and wherein the temperature controller is configured to activate the standby mode if the current time falls inside a usage window and the sleep override switch is not used.

13. A system according to claim 12, wherein the temperature controller is configured so that:
a) if the sleep override switch is not used and the current time does not fall inside a usage window, the sleep mode is activated;
b) if the sleep override switch is not used and the current time falls inside a usage window, the standby mode is activated; and,
c) if the sleep override switch is used, the temperature controller adjusts the temperature of the water to the dispensing temperature.

14. A system according to any one of claims 8 to 13, wherein the system further includes a usage detector for detecting when water is dispensed, the system being configured to:
a) determine, using the usage detector, one or more usage events; and,
b) update the usage profile based on the one or more usage events.

15. A system according to claim 14, wherein:
a) updating the usage profile includes:
i) determining a usage event;
ii) determining, using the clock, a usage time corresponding to the usage event;
iii) comparing the usage time to the one or more usage windows; and,
iv) if the usage time does not fall inside a usage window, adding or adjusting a usage window to cover the usage time; or,
b) the usage profile includes a plurality of time blocks within the predetermined time period and the one or more usage windows are defined by setting each time block as a usage time block or a sleep time block, and updating the usage profile includes, for a time block:
i) determining a number of usage events within the time block;
ii) if the number of usage events exceeds a usage threshold, setting the time block as a usage time block; and,
iii) if the number of usage events does not exceed the usage threshold, setting the time block as a sleep time block.
